# FASCICULE DE BREVET EUROPEEN

(11) **EP 2 436 598 B1**
(45) Date de publication et mention de la délivrance du brevet: **01.07.2015**
(21) Numéro de dépôt: 11007611.4
(22) Date de dépôt: 19.09.2011
(51) Int. Cl.: B64C 25/00, B64C 25/12, B64C 25/32, B64C 25/14

(54) **Train d'atterissage, aéronef muni dudit train d'atterissage, et procédé d'atterissage dudit aéronef**
Fahrwerk, mit diesem Fahrwerk ausgestattetes Flugzeug und Landeverfahren dieses Flugzeugs
Landing gear, aircraft provided with said landing gear and landing method for said aircraft

(30) Priorité: 04.10.2010 FR 1003922
(43) Date de publication de la demande: 04.04.2012
(73) Titulaire: Airbus Helicopters, 13725 Marignane Cedex (FR)
(72) Inventeur: Barbieri, André, 13960 Sausset les Pins (FR); Cacciaguerra, Bruno, 13100 Aix en Provence (FR)
(74) Mandataire: GPI & Associés

(56) Documents cités:
- EP-A1- 0 275 735
- EP-A1- 1 714 870
- EP-A1- 1 721 827
- FR-A1- 2 383 070
- FR-A1- 2 689 087

## Description

La présente invention concerne un train d'atterrissage, un aéronef muni d'au moins un train d'atterrissage rétractable, notamment un giravion de type hélicoptère, et un procédé d'atterrissage dudit aéronef.

Un aéronef comporte classiquement un atterrisseur muni d'une pluralité de trains d'atterrissage.

Pour au moins minimiser la traînée aérodynamique d'un atterrisseur en vol de croisière afin d'obtenir un aéronef volant à grande vitesse ou sur une longue distance, il est connu de rétracter les trains d'atterrissage dans un logement approprié.

On distingue alors deux installations alternatives.

Selon un premier type d'installation, on utilise un carénage profilé dénommé parfois « sponson » par l'homme du métier, le train d'atterrissage étant alors rétracté dans le logement délimité notamment par ce carénage profilé en vol.

Bien qu'intéressant, ce premier type d'installation présente l'inconvénient de nécessiter des carénages protubérants engendrant une traînée aérodynamique non négligeable. Le gain en traînée généré par l'escamotage du train d'atterrissage en vol de croisière est donc minimisé par la traînée aérodynamique due aux carénages occultant ce train d'atterrissage.

Selon un deuxième type d'installation, on agence le train d'atterrissage dans une case de train, à savoir un logement ménagé dans la cellule de l'aéronef. La case de train peut être fermée par une trappe mobile reconstituant localement ledit revêtement.

Ce deuxième type d'installation ne génère alors pas une traînée aérodynamique supplémentaire en vol. Toutefois, il présente l'inconvénient de nécessiter des logements volumineux s'avérant pénalisant en termes de masse. De plus, il est parfois difficile d'obtenir le volume requis à l'intérieur de la cellule.

De plus, une partie du train d'atterrissage est parfois localisée entre des cadres porteurs d'une cabine de l'aéronef, cette localisation étant une source de bruit voire d'intrusion d'éléments du train d'atterrissage dans la cabine en cas d'accident.

Par ailleurs, un train d'atterrissage est parfois non seulement défini pour absorber l'énergie résultant d'un atterrissage normal, mais aussi pour absorber l'énergie résultant d'un atterrissage d'urgence, autrement dit lors d'un crash de l'aéronef dans des conditions d'urgence déterminées à l'aide des règlements de certification par exemple.

Le train d'atterrissage comporte alors une jambe de train supportant un moyen de contact, une roue par exemple, et peut aussi comporter un vérin-amortisseur. Ce vérin-amortisseur permet d'une part de faire basculer la jambe de train pour la déployer ou l'escamoter en fonction du besoin, et, d'autre part d'absorber au moins une partie de l'énergie résultant d'un atterrissage d'urgence.

Un tel vérin-amortisseur peut posséder un espace à basse pression sollicité pour remplir la fonction déploiement/ rétraction de la jambe de train, et un espace à haute pression sollicité pour remplir la fonction amortisseur destinée à dissiper l'énergie d'un atterrissage d'urgence.

Agencer un train d'atterrissage anti-crash dans un espace restreint et ne générant pas une traînée aérodynamique importante, s'avère alors complexe.

De plus, on note que lors d'un crash, le train d'atterrissage se rétracte dans son logement. Lorsque ce logement est une case de train ménagée dans la cellule de l'aéronef, le train d'atterrissage risque de traverser les parois délimitant le logement, et pénétrer le cas échéant dans la cabine de l'aéronef, par exemple.

Le document EP 0 275 735 présente un vérin-amortisseur, et un train d'atterrissage muni d'un tel vérin-amortisseur.

Un moyen de contact est agencé à l'extrémité d'une jambe de train apte à pivoter autour d'un axe de rotation parallèle à l'axe transversal de l'aéronef et donc perpendiculaire au plan antéropostérieur de symétrie de cet aéronef.

De plus, un vérin-amortisseur est articulé à cette jambe de train, le vérin-amortisseur étant sensiblement parallèle à l'axe en élévation de l'aéronef.

Le vérin-amortisseur a pour fonction de rétracter le moyen de contact dans un carénage profilé, et de permettre l'absorption d'énergie lors d'un atterrissage. Ce vérin-amortisseur risque donc de pénétrer indûment dans la cellule en cas d'atterrissage d'urgence.

Le document FR 2 689 087 qui est considéré l'état de la technique le plus proche présente un train d'atterrissage muni d'une jambe de train, cette jambe de train comprenant un premier élément et un deuxième élément articulés l'un à l'autre par un axe de pivotement.

Un amortisseur est de plus agencé entre le premier élément et le deuxième élément.

En outre, le premier élément est muni d'un moyen de contact, le deuxième élément étant muni d'un vérin-amortisseur de rétraction apte à faire pivoter le moyen de contact autour de l'axe de pivotement.

On note que lors d'un crash, le moyen de contact revient dans son logement, le mouvement de ce moyen de contact étant identique lors d'un crash et d'une rétraction.

Le document FR 2 383 070 présente un train d'atterrissage muni d'une jambe de train portant un moyen de contact via un essieu et un levier coudé, la jambe de train étant articulée à un aéronef par un cardan.

De plus, le train d'atterrissage comprend un amortisseur articulé par un premier cardan à la jambe de train et à l'aéronef par un deuxième cardan.

Enfin, le train d'atterrissage comprend un vérin de manoeuvre et de contreventement, et non pas un vérin-amortisseur, qui est articulé à l'aéronef via un premier cardan, et à la jambe de train par un deuxième cardan.

A l'instar du document FR 2 689 087, lors d'un crash, le moyen de contact revient dans son logement, le mouvement de ce moyen de contact étant identique lors d'un crash et d'une rétraction.

On connaît aussi les documents EP1721827 et EP1714870.

La présente invention a alors pour objet de proposer un aéronef muni d'au moins un atterrisseur pouvant être rétracté dans un espace exigu générant une faible traînée aérodynamique.

Selon l'invention, un train d'atterrissage est muni d'une jambe de train ainsi que d'un amortisseur, ce train d'atterrissage ayant de plus un vérin-amortisseur pour assurer la rétraction de la jambe de train dans un logement d'un aéronef et le déploiement de cette jambe de train hors du logement préalablement à un atterrissage ainsi que pour assurer une fonction absorption d'énergie durant un atterrissage d'urgence, la jambe de train comprenant un premier élément portant un moyen de contact et un deuxième élément qui sont articulés l'un à l'autre par un axe d'articulation pour former un compas. Chaque élément représente une branche du compas formé par la jambe de train.

On se référera à la littérature pour obtenir des descriptions détaillées d'un vérin-amortisseur.

De plus, on note que l'amortisseur est suffisant lors d'atterrissages dit normaux à savoir avec une vitesse de descente qui est inférieure à un seuil prédéterminé. Dès lors, durant de tels atterrissages normaux, le vérin-amortisseur n'est pas sollicité pour absorber l'énergie résultant d'un impact du moyen de contact avec le sol, une roue par exemple. Par contre, lors d'un atterrissage d'urgence se produisant avec une vitesse de descente supérieure ou égale au seuil prédéterminé, le vérin-amortisseur dissipe au moins une partie de l'énergie résultant de l'impact du moyen de contact avec le sol.

Ce train d'atterrissage est notamment remarquable en ce qu'il comporte un moyen de pivotement autorisant le pivotement de la jambe de train autour d'une direction de pivotement d'une part selon un premier sens pour rétracter cette jambe de train dans le logement sous l'impulsion dudit vérin-amortisseur durant un atterrissage normal et d'autre part selon un deuxième sens opposé au premier sens lors d'un atterrissage d'urgence pour éloigner la jambe de train dudit logement en sollicitant le vérin-amortisseur.

On comprend que l'on peut nommer par simplification par « rotation autour du moyen de pivotement » une rotation d'un organe autour de la direction de pivotement du moyen de pivotement.

Ainsi, on peut disposer le train d'atterrissage dans un espace réduit, et notamment une case de train, en au moins limitant le risque d'intrusion d'un organe du train d'atterrissage dans la cabine de l'aéronef.

Le train d'atterrissage peut comporter une ou plusieurs des caractéristiques additionnelles qui suivent.

Par exemple, le moyen de pivotement peut être solidarisé à l'amortisseur, cet amortisseur étant articulé au vérin-amortisseur et à la jambe de train. On comprend que le moyen de pivotement comprend une structure coopérant avec un organe de fixation d'un aéronef, par exemple par le biais d'un moyen de glissement tel qu'un palier lisse monté ou non dans une rotule ou encore par le biais d'un moyen de roulement tel qu'un roulement à billes ou équivalent.

Selon un autre aspect, l'amortisseur comporte une première partie et une deuxième partie qui sont mobiles l'une par rapport à l'autre, une tige coulissant dans un corps par exemple, la première partie étant articulée au premier élément de la jambe de train, la deuxième partie étant solidaire du moyen de pivotement et étant articulée au deuxième élément de la jambe de train et au vérin-amortisseur.

Par ailleurs, le moyen de pivotement et notamment sa direction de pivotement présentent éventuellement un premier angle aigu avec la deuxième partie pour favoriser la cinématique explicitée précédemment.

De plus, le vérin-amortisseur peut présenter un deuxième angle aigu avec un plan en élévation passant par le deuxième élément et ladite deuxième partie.

Outre un train d'atterrissage, l'invention vise aussi un aéronef, tel qu'un giravion par exemple de type hélicoptère, muni de ce train d'atterrissage.

Selon l'invention, un aéronef s'étend longitudinalement selon un axe longitudinal, transversalement selon un axe transversal et en élévation selon un axe en élévation définissant un référentiel orthonormé, cet aéronef comportant un atterrisseur comportant au moins un train d'atterrissage muni d'une jambe de train ainsi que d'un amortisseur et d'un vérin-amortisseur, ce vérin-amortisseur assurant la rétraction de cette jambe de train dans un logement d'un aéronef et le déploiement de ladite jambe de train hors du logement préalablement à un atterrissage et assurant une fonction absorption d'énergie durant un atterrissage d'urgence se produisant dans des conditions prédéterminées, la jambe de train comprenant un premier élément portant un moyen de contact et un deuxième élément qui sont articulés l'un à l'autre pour former un compas par un axe d'articulation.

Le train d'atterrissage comporte un moyen de pivotement autorisant le pivotement de la jambe de train d'une part selon un premier sens pour rétracter cette jambe de train dans le logement sous l'impulsion du vérin-amortisseur et d'autre part selon un deuxième sens opposé au premier sens lors d'un atterrissage d'urgence pour éloigner cette jambe de train du logement en sollicitant le vérin-amortisseur.

Cet aéronef peut comporter une ou plusieurs des caractéristiques qui suivent.

Ainsi, le moyen de pivotement et notamment la direction de pivotement du moyen de pivotement présentent selon un aspect une première angulation aiguë avec un plan antéropostérieur de l'aéronef défini par l'axe en élévation et l'axe longitudinal de cet aéronef, et un premier angle aigu avec l'amortisseur.

De plus, l'amortisseur peut être dirigé selon un axe dénommé « axe déployé » par commodité, qui est parallèle au plan antéropostérieur de l'aéronef et peut présenter un angle aigue avec l'axe en élévation de l'aéronef lorsque le train d'atterrissage est déployé suite à un décollage ou préalablement à un atterrissage, indépendamment du type d'atterrissage à savoir normal ou d'urgence.

Selon un autre aspect, le moyen de pivotement est solidarisé à l'amortisseur, cet amortisseur étant articulé au vérin-amortisseur et à la jambe de train.

Par ailleurs, l'amortisseur peut comporter une première partie et une deuxième partie mobiles l'une par rapport à l'autre, la première partie étant articulée au premier élément de la jambe de train, la deuxième partie étant solidaire du moyen de pivotement et étant articulée au deuxième élément de la jambe de train et au vérin-amortisseur.

Enfin, l'aéronef comportant un fuselage muni d'une barque, la barque étant une zone de l'aéronef située sous le plancher de la cabine de cet aéronef, le logement est au moins partiellement agencé dans la barque.

En outre, l'invention vise un procédé d'atterrissage dans des conditions d'urgence mis en oeuvre par un aéronef du type précité.

Selon l'invention, un procédé d'atterrissage d'un aéronef s'étendant longitudinalement selon un axe longitudinal, transversalement selon un axe transversal et en élévation selon un axe en élévation définissant un référentiel orthonormé, cet aéronef comportant un atterrisseur comportant au moins un train d'atterrissage muni d'une jambe de train ainsi que d'un amortisseur et d'un vérin-amortisseur, le vérin-amortisseur assurant d'une part la rétraction de la jambe de train dans un logement de l'aéronef et le déploiement de ladite jambe de train hors dudit logement dans des conditions normales et d'autre part une fonction absorption d'énergie durant un atterrissage d'urgence, la jambe de train comprenant un premier élément portant un moyen de contact et un deuxième élément qui sont articulés l'un à l'autre par un axe d'articulation pour former un compas, le train d'atterrissage comportant un moyen de pivotement autour duquel pivote la jambe de train, est notamment remarquable en ce que :
- préalablement au contact de l'aéronef avec le sol, on déploie le train d'atterrissage hors du logement en rétractant le vérin-amortisseur dans une première position rétractée, la jambe de train devant effectuer une rotation autour du moyen de pivotement selon un premier sens pour revenir dans le logement,
- suite au contact du moyen de contact sur le sol, on comprime l'amortisseur, l'angulation séparant le premier élément et le deuxième élément de la jambe de train étant réduite de manière à refermer le compas formé par cette jambe de train,
- lorsque l'amortisseur atteint une compression maximale, on écarte la jambe de train du logement en effectuant une rotation de la jambe de train autour du moyen de pivotement selon un deuxième sens opposé au premier sens.

Ce procédé peut comporter une ou plusieurs des caractéristiques qui suivent.

Par exemple, pour écarter la jambe de train du logement, il est possible d'appliquer les étapes suivantes :
- on utilise la force de réaction du sol exercée sur le moyen de contact pour créer un moment induisant la mise en rotation de ladite jambe de train autour dudit moyen de pivotement, à savoir autour de la direction de pivotement de ce moyen de pivotement,
- on met en rotation la jambe de train selon le deuxième sens en sollicitant le vérin-amortisseur en le rétractant dans une deuxième position rétractée, le vérin amortisseur s'étendant sur une deuxième longueur dans la deuxième position rétractée inférieure à une première longueur atteinte dans la première position rétractée.

De plus, on peut étendre le vérin-amortisseur lorsque la deuxième position rétractée est atteinte.

L'invention et ses avantages apparaîtront avec plus de détails dans le cadre de la description qui suit avec des exemples de réalisation donnés à titre illustratif en référence aux figures annexées qui représentent :
- la figure 1, une vue de côté montrant un train d'atterrissage selon l'invention sorti d'un logement d'un aéronef,
- les figures 2 et 3, une vue de côté et de face montrant un train d'atterrissage selon l'invention rentré dans un logement d'un aéronef,
- les figures 4 à 12, des vues explicitant le procédé selon l'invention.

Les éléments présents dans plusieurs figures distinctes sont affectés d'une seule et même référence.

On note que trois directions X, Y et Z orthogonales les unes par rapport aux autres définissent le référentiel R d'un aéronef selon l'invention sur les figures.

La première direction longitudinale représente l'axe longitudinal X de l'aéronef présenté.

Une deuxième direction dite transversale représente l'axe transversal Y de l'aéronef présenté.

Enfin, une troisième direction dite d'élévation correspond à l'axe en élévation Z l'aéronef présenté.

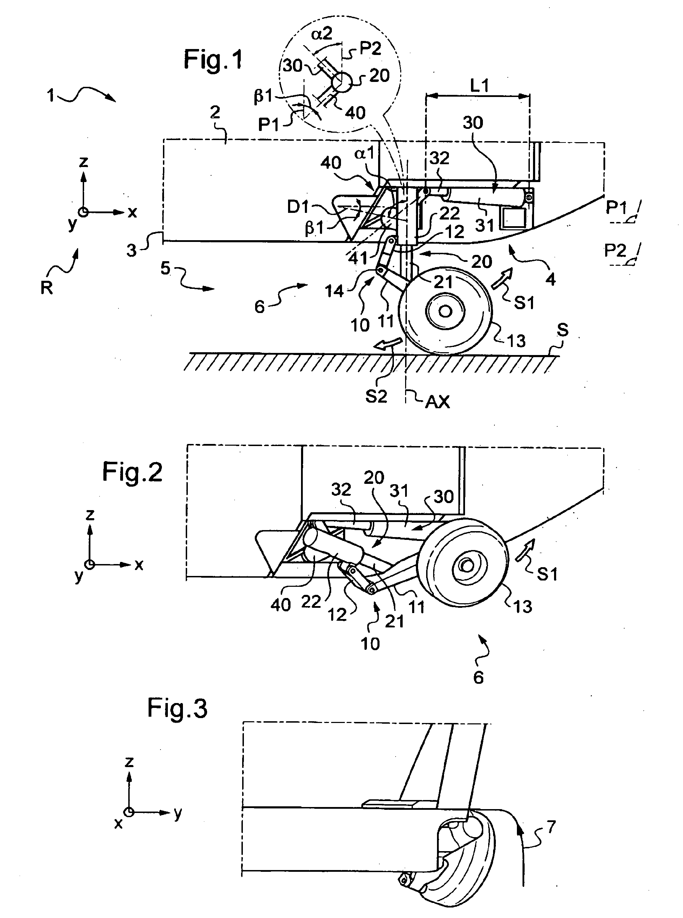

La figure 1 présente une vue de côté d'un aéronef 1 selon l'invention.

Cet aéronef 1 comprend un fuselage 2 qui s'étend longitudinalement d'une extrémité avant vers une extrémité arrière selon un axe longitudinal X. De plus, le fuselage s'étend latéralement selon un axe transversal Y et en élévation selon un axe en élévation Z. Le plan défini par les axes longitudinal X et en élévation Z représente alors un plan antéropostérieur P1 de symétrie de l'aéronef 1.

Cet aéronef 1 comporte un atterrisseur 5 muni d'au moins un train d'atterrissage 6 selon l'invention rétractable dans un logement 4 de l'aéronef 1.

Ce train d'atterrissage 6 est pourvu d'un moyen de contact 13, d'une jambe de train 10, d'un amortisseur 20 et d'un vérin-amortisseur 30.

Le moyen de contact roulant est porté par la jambe de train 10, ce moyen de contact 13 étant pourvu d'au moins une roue par exemple.

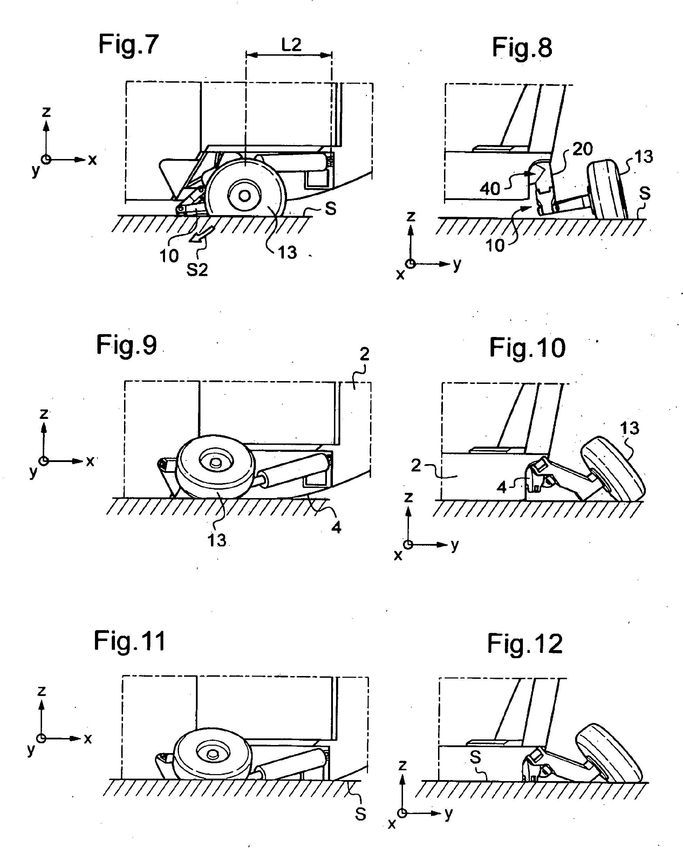

Cette jambe de train 10 a une forme de compas. Ainsi, la jambe de train 10 comprend un premier élément 11 portant le moyen de contact 13 et un deuxième élément 12, le premier élément 11 étant articulé au deuxième élément 12 par un axe d'articulation 14. Le premier élément 11 et le deuxième élément 12 sont dès lors mobiles l'un par l'autre en pouvant s'éloigner ou se rapprocher l'un de l'autre dans un mouvement rotatif autour de l'axe d'articulation 14. Le premier élément 11 et le deuxième élément 12 peuvent en outre être contenus dans un même plan lorsque le deuxième élément 12 surplombe le premier élément 11. Le premier élément 11 et le deuxième élément 12 peuvent aussi être décalés l'un par rapport à l'autre en présentant un décalage transversal comme le montre la figure 8 par exemple.

De plus, le train d'atterrissage comprend un amortisseur 20 reliant notamment le premier élément 11 de la jambe de train 10 au deuxième élément 12 de cette jambe de train 10. Par exemple, l'amortisseur possède une première partie 21 articulée par un moyen d'articulation usuel au premier élément 11 et une deuxième partie 22 articulée par un moyen d'articulation usuel au deuxième élément 12, la première partie 21 et la deuxième partie 22 étant mobiles l'une par l'autre pour permettre une rétraction ou une extension de l'amortisseur. Ainsi, la première partie 21 peut être une tige coulissant à l'intérieur d'un corps représentant la deuxième partie 22.

Par ailleurs, le train d'atterrissage 6 comporte un vérin-amortisseur 30 articulé à la deuxième partie 22 de l'amortisseur par un moyen d'articulation usuel, une articulation à rotule coopérant avec deux joues solidaires de la deuxième partie ou un cardan par exemple.

Le vérin-amortisseur 30 peut être du type présenté par le document FR 2 689 087 de manière à permettre d'une part le déploiement hors d'un logement 4 ou la rétraction dans ce logement 4 du moyen de contact 13, et d'autre part pour absorber l'énergie lors d'un atterrissage d'urgence à partir d'un seuil prédéterminé. Par exemple, le vérin-amortisseur 30 comporte une chambre de compression et une chambre de rétraction pour déployer ou rétracter le train d'atterrissage, ainsi qu'au moins une chambre à haute pression sollicitée uniquement lors desdits atterrissages d'urgence.

Alternativement, le vérin-amortisseur 30 peut comporter une chambre de compression et une chambre de rétraction pour déployer ou rétracter le train d'atterrissage, ainsi qu'une ou plusieurs soupapes s'ouvrant à un niveau de pression prédéfini correspondant aux conditions de crash, et permettant de faire communiquer la chambre de compression et la chambre de rétraction précitées, afin d'absorber de l'énergie par laminage du liquide hydraulique de l'amortisseur lors de la traversée des orifices dégagés par les soupapes.

Une première portion 31 est alors fixée à l'intérieur d'un logement 4 d'un aéronef, alors qu'une deuxième portion 32 de ce vérin-amortisseur 30 est fixée à l'amortisseur 20, la première portion 31 étant mobile par rapport à la deuxième portion 32 pour étendre ou rétracter le vérin-amortisseur 30.

Outre le vérin-amortisseur 30, le train d'atterrissage 6 comporte un moyen de pivotement 40 pour être relié à l'intérieur du logement 4.

Par exemple, le moyen de pivotement comprend un cylindre 41 solidaire de l'amortisseur 20 et s'étendant selon une direction de pivotement D1, ce cylindre coopérant avec un axe de pivotement fixé au logement 4, par le biais d'un moyen de type roulement à billes ou à rouleaux ou par le biais d'un palier lisse monté éventuellement dans une rotule, par exemple. Le moyen de pivotement est alors solidaire de l'amortisseur 20.

L'amortisseur 20 est donc articulé à la jambe de train 10 ainsi qu'au vérin-amortisseur 30, et de plus solidarisé à un organe mobile en rotation d'un moyen de pivotement 40 tel qu'un cylindre par exemple.

En outre, on note que la moyen de pivotement 40 et notamment sa direction de pivotement D1 présentent un premier angle aiguë α1 avec la deuxième partie 22 de l'amortisseur 20.

De plus, on constate que le moyen de pivotement 40 et notamment sa direction de pivotement D1 présentent une première angulation aiguë β1 avec le plan antéropostérieur P1 de symétrie de l'aéronef.

Par ailleurs, l'amortisseur 20 est dirigé selon un axe déployé AX parallèle au plan antéropostérieur de l'aéronef, et pouvant présenter un angle aigue par rapport à l'axe en élévation Z de l'aéronef 1 lorsque le train d'atterrissage 6 est déployé.

On note qu'indépendamment de la position de l'amortisseur 20 et de la jambe de train 10, le vérin-amortisseur 30 présente un deuxième angle aigu α2 avec un plan en élévation P2 passant par le deuxième élément 12 de la jambe de train 10 et la deuxième partie 22 de l'amortisseur 20.

A partir de la position déployée représentée sur la figure 1, la jambe de train 10 effectue alors sous l'impulsion du vérin-amortisseur une rotation autour de la direction de pivotement du moyen de pivotement 40 selon un premier sens S1 pour être rétracté en vol. A l'inverse, lors d'un atterrissage d'urgence, la jambe de train 10 effectue sous l'effet de la vitesse de descente de l'aéronef 1 et de la rencontre du moyen de contact 13 avec le sol, une rotation autour de la direction de pivotement du moyen de pivotement 40 selon un deuxième sens S2 opposé au premier sens S1 pour s'écarter du logement 4 en sollicitant la fonction absorption d'énergie du vérin-amortisseur 30.

La figure 2 représente une vue de côté d'un train d'atterrissage 6 rétracté à l'intérieur d'un logement 4. Dans cette position, le vérin-amortisseur 30 est étendu, en s'étendant sur une longueur étendue L0.

Le fuselage 2 comprenant une barque 3, le logement 4 peut être ménagé au moins partiellement dans cette barque 3.

En référence à la figure 3, le logement 4 peut être partiellement contenu dans la barque 3, la barque coopérant avec un carénage 7 pour définir ledit logement. On note que l'architecture particulière de l'invention permet de minimiser les dimensions de ce carénage.

Toutefois, on comprend que la barque peut contenir l'intégralité du train d'atterrissage sans l'adjonction d'un tel carénage, l'encombrement du train d'atterrissage étant minimisé.

L'adjonction ou non d'un carénage extérieur de faible dimension dépend finalement de l'espace qu'il est possible de dégager dans la barque pour accueillir le train d'atterrissage.

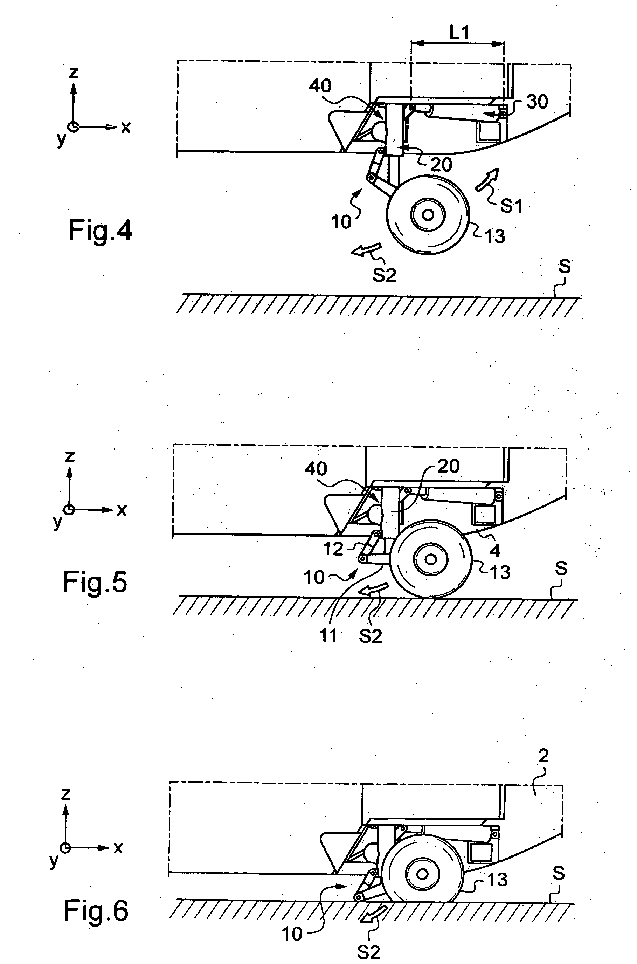

En référence à la figure 4, préalablement au contact de l'aéronef 1 avec le sol S, on déploie le train d'atterrissage 6 hors du logement 4 en rétractant le vérin-amortisseur 30 dans une première position rétractée sur une première longueur L1. La jambe de train 10 effectue alors une rotation selon un deuxième sens S2, cette jambe de train devant à l'inverse effectuer une rotation autour du moyen de pivotement 40 selon un premier sens S1 pour revenir dans le logement 4.

En référence à la figure 5, suite au contact du moyen de contact 13 sur le sol S, l'amortisseur 20 se comprime en se rétractant. Le compas de la jambe de train 10 se ferme, le premier élément 11 se rapprochant du deuxième élément 12.

Lorsque l'atterrissage est un atterrissage normal, le train d'atterrissage reste dans une position d'équilibre du type présenté sur cette figure 5.

Par contre, durant un atterrissage d'urgence se produisant avec une vitesse de descente supérieure ou égale à un seuil prédéterminé, lorsque l'amortisseur 20 atteint une compression maximale, on écarte la jambe de train 10 du logement 4 en effectuant une rotation de la jambe de train 10 autour du moyen de pivotement 40 selon le deuxième sens S2.

Plus précisément, en référence aux figures 6, 7 et 8, la réaction du sol S sur la roue du moyen de contact permet d'écarter la jambe de train 10 du logement 4. En effet, à partir d'un instant prédéterminé correspondant par exemple au moment où le premier élément atteint le sol, on utilise la réaction du sol S sur la roue du moyen de contact pour créer un moment autour de la direction de pivotement D1 qui fait tourner la jambe de train 10 autour de cette direction de pivotement, selon le deuxième sens S2, en sollicitant le vérin-amortisseur 30.

En référence aux figures 7 et 8, la réaction du sol S sur le train d'atterrissage crée un moment autour de la direction de pivotement D1. Ce moment est à l'origine de la rotation de la jambe de train 10 autour du moyen de pivotement, à savoir autour de la direction de pivotement selon le deuxième sens S2 en sollicitant le vérin-amortisseur 30.

Au lieu de provoquer une rétraction du train d'atterrissage dans logement 4, l'invention prévoit alors d'écarter ce train d'atterrissage dudit logement.

Le mouvement rotatif de la jambe de train 10 et de l'amortisseur 20 selon le deuxième sens S2 entraîne une rétraction du vérin-amortisseur 30 dans une deuxième position rétractée, le vérin-amortisseur 30 s'étendant sur une deuxième longueur L2 dans la deuxième position rétractée inférieure à la première longueur L1 atteinte dans la première position rétractée.

En référence aux figures 9 et 10, lorsque le fuselage 2 de l'aéronef 1 touche le sol S, on étend le vérin-amortisseur 30.

Quand le vérin-amortisseur a atteint la deuxième position rétracté, le fuselage 2 de l'aéronef 1 entre en contact avec le sol S. Le vérin-amortisseur 30 n'est alors plus sollicité en compression, et s'étend en continuant d'éloigner le moyen de contact 13 du logement 4.

En référence aux figures 11 et 12, le fond de la barque se déforme au contact du sol. On note que le train d'atterrissage 6 n'est pas inutile pour autant à ce stade de l'atterrissage. Au contraire, en étant éloigné du logement 4, ce train d'atterrissage remplit une fonction de soutien latéral du fuselage, et tend à éviter un basculement du fuselage sur le côté par exemple.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Train d'atterrissage (6) muni d'une jambe de train (10) ainsi que d'un amortisseur (20), ledit train d'atterrissage (6) comprenant un vérin-amortisseur (30) pour assurer la rétraction de ladite jambe de train (10) dans un logement (4) d'un aéronef (1) et le déploiement de ladite jambe de train (10) hors dudit logement (4) préalablement à un atterrissage ainsi que pour assurer une fonction absorption d'énergie durant un atterrissage d'urgence, ladite jambe de train (10) comprenant un premier élément (11) portant un moyen de contact (13) et un deuxième élément (12) qui sont articulés l'un à l'autre,
**caractérisé en ce que** ledit train d'atterrissage (6) comporte un moyen de pivotement (40) autorisant le pivotement de ladite jambe de train (10) autour d'une direction de pivotement (D1) d'une part selon un premier sens (S1) pour rétracter cette jambe de train (10) dans ledit logement (4) sous l'impulsion dudit vérin-amortisseur (30) et d'autre part selon un deuxième sens (S2) opposé au premier sens (S1) lors d'un atterrissage d'urgence pour éloigner ladite jambe de train (10) dudit logement (4) en sollicitant ledit vérin-amortisseur (30).

2. Train d'atterrissage selon la revendication 1,
**caractérisé en ce que** ledit moyen de pivotement (40) est solidarisé à l'amortisseur (20), ledit amortisseur (20) étant articulé au vérin-amortisseur (30) et à la jambe de train (10).

3. Train d'atterrissage selon l'une quelconque des revendications 1 à 2,
**caractérisé en ce que** ledit amortisseur (20) comporte une première partie (21) et une deuxième partie (22) qui sont mobiles l'une par rapport à l'autre, la première partie (21) étant articulée au premier élément (11) de la jambe de train (10), la deuxième partie (22) étant solidaire dudit moyen de pivotement (40) et étant articulée au deuxième élément (12) de la jambe de train (10) et au vérin-amortisseur (30).

4. Train d'atterrissage selon la revendication 3,
**caractérisé en ce que** ledit moyen de pivotement (40) présente un premier angle aigu (α1) avec ladite deuxième partie (22).

5. Train d'atterrissage selon la revendication 3,
**caractérisé en ce que** ledit vérin-amortisseur (30) présente un deuxième angle aigu (α2) avec un plan en élévation (P2) passant par ledit deuxième élément (12) et ladite deuxième partie (22).

6. Aéronef (1) s'étendant longitudinalement selon un axe longitudinal (X), transversalement selon un axe transversal (Y) et en élévation selon un axe en élévation (Z) définissant un référentiel orthonormé (R), ledit aéronef (1) comportant un atterrisseur (5) comportant au moins un train d'atterrissage (6) selon l'une quelconque des revendications 1 à 5.

7. Aéronef selon la revendication 6,
**caractérisé en ce que** ledit moyen de pivotement (40) présente une première angulation aiguë (β1) avec un plan antéropostérieur (P1) de l'aéronef (1) défini par l'axe en élévation (Z) et l'axe longitudinal (X) de cet aéronef (1), et un premier angle aigu (α1) avec ledit amortisseur (20).

8. Aéronef selon l'une quelconque des revendications 6 à 7,
**caractérisé en ce que** ledit amortisseur (20) est dirigé selon un axe déployé (AX) lorsque le train d'atterrissage (6) est déployé, cet axe déployé étant parallèle à un plan antéropostérieur (P1) de l'aéronef (1) défini par l'axe en élévation (Z) et l'axe longitudinal (X) de cet aéronef (1).

9. Aéronef selon l'une quelconque des revendications 6 à 8,
**caractérisé en ce que** ledit moyen de pivotement (40) est solidarisé à l'amortisseur (20), ledit amortisseur (20) étant articulé au vérin-amortisseur (30) et à la jambe de train (10).

10. Aéronef selon l'une quelconque des revendications 6 à 9,
**caractérisé en ce que** ledit amortisseur (20) comporte une première partie (21) et une deuxième partie (22) mobiles l'une par rapport à l'autre, la première partie (21) étant articulée au premier élément (11) de la jambe de train (10), la deuxième partie (22) étant solidaire dudit moyen de pivotement (40) et étant articulée au deuxième élément (12) de la jambe de train (10) et au vérin-amortisseur (30).

11. Aéronef selon l'une quelconque des revendications 6 à 10,
**caractérisé en ce que**, ledit aéronef (1) comportant un fuselage (2) muni d'une barque (3), ledit logement (4) est au moins partiellement agencé dans ladite barque (3).

12. Procédé d'atterrissage d'un aéronef (1) s'étendant longitudinalement selon un axe longitudinal (X), transversalement selon un axe transversal (Y) et en élévation selon un axe en élévation (Z) définissant un référentiel orthonormé (R), ledit aéronef (1) comportant un atterrisseur (5) comportant au moins un train d'atterrissage (6) muni d'une jambe de train (10) ainsi que d'un amortisseur (20) et d'un vérin-amortisseur (30), ledit vérin-amortisseur (30) assurant d'une part la rétraction de ladite jambe de train (10) dans un logement (4) dudit aéronef (1) et le déploiement de ladite jambe de train (10) hors dudit logement (4) et d'autre part une fonction absorption d'énergie durant un atterrissage d'urgence, ladite jambe de train (10) comprenant un premier élément (11) portant un moyen de contact (13) et un deuxième élément (12) qui sont articulés l'un à l'autre, ledit train d'atterrissage (6) comportant un moyen de pivotement (40) autour duquel pivote ladite jambe de train (10), au cours duquel :
- préalablement au contact de l'aéronef (1) avec le sol (S), on déploie le train d'atterrissage (6) hors dudit logement (4) en rétractant ledit vérin-amortisseur (30) dans une première position rétractée, la jambe de train (10) devant effectuer une rotation autour du moyen de pivotement (30) selon un premier sens (S1) pour retourner dans le logement (4),
- suite au contact du moyen de contact (13) sur le sol (S), on comprime l'amortisseur (20),
- lorsque ledit amortisseur (20) atteint une compression maximale, on écarte ladite jambe de train (10) dudit logement (4) en effectuant une rotation de ladite jambe de train (10) autour dudit moyen de pivotement (40) selon un deuxième sens (S2) opposé au premier sens (S1).

13. Procédé selon la revendication 12,
**caractérisé en ce que** pour écarter ladite jambe de train (10) :
- on utilise la force de réaction du sol (S) exercée sur le moyen de contact (13) pour créer un moment induisant la mise en rotation de ladite jambe de train (10) autour dudit moyen de pivotement (40),
- on met en rotation ladite jambe de train (10) selon ledit deuxième sens (S2) en sollicitant le vérin-amortisseur (30) en le rétractant dans une deuxième position rétractée, ledit vérin-amortisseur (30) s'étendant sur une deuxième longueur (L2) dans la deuxième position rétractée inférieure à une première longueur (L1) atteinte dans la première position rétractée.

14. Procédé selon la revendication 13,
**caractérisé en ce que** l'on étend ledit vérin-amortisseur (30) lorsque ladite deuxième position rétractée est atteinte.

## Patentansprüche

1. Fahrwerk (6) mit einem Fahrwerkbein (10) sowie einem Dämpfer (20), wobei das Fahrwerk (6) einen Zylinderdämpfer (30) aufweist für das Einziehen des Fahrwerkbeins (10) in ein Gehäuse (4) eines Luftfahrzeugs (1) und das Ausfahren des Fahrwerkbeins (10) aus dem Gehäuse (4) vor einer Landung, sowie um eine Energieabsorptionsfunktion während einer Notlandung sicherzustellen, wobei das Fahrwerkbein (10) ein erstes Element (11) aufweist, welches ein Kontaktmittel (13) trägt, und ein zweites Element (12), die aneinander angelenkt sind,
**dadurch gekennzeichnet, dass** das Fahrwerk (6) ein Schwenkmittel (40) aufweist, welches das Verschwenken des Fahrwerkbeins (10) um eine Schwenkrichtung (D1), einerseits in einer ersten Richtung (S1), um das Fahrwerkbein (10) in das Gehäuse (4) durch die Einwirkung des Zylinderdämpfers (30) einzuziehen, und andererseits in eine zweite Richtung (S2), die entgegengesetzt zur ersten Richtung (S1) verläuft, während einer Notlandung erlaubt, um das Fahrwerkbein (10) von dem Gehäuse (4) wegzubewegen unter Inanspruchnahme des Zylinderdämpfers (30).

2. Fahrwerk nach Anspruch 1, **dadurch gekennzeichnet, dass** das Schwenkmittel (40) am Dämpfer (20) befestigt ist, wobei der Dämpfer (20) an dem Zylinderdämpfer (30) und an dem Fahrwerkbein (10) angelenkt ist.

3. Fahrwerk nach einem der Ansprüche 1 bis 2, **dadurch gekennzeichnet, dass** der Dämpfer (20) einen ersten Teil (21) und einen zweiten Teil (22) aufweist, die zueinander beweglich sind, wobei der erste Teil (21) an dem ersten Element (11) des Fahrzeugbeins (10) angelenkt ist, und der zweite Teil (22) mit dem Schwenkmittel (40) fest verbunden ist und an dem zweiten Element (12) des Fahrwerkbeins (10) und am Zylinderdämpfer (30) angelenkt ist.

4. Fahrwerk nach Anspruch 3, **dadurch gekennzeichnet, dass** das Schwenkmittel (40) mit einem ersten spitzen Winkel (α1) zu dem zweiten Teil (22) ausgerichtet ist.

5. Fahrwerk nach Anspruch 3, **dadurch gekennzeichnet, dass** der Zylinderdämpfer (30) einen zweiten spitzen Winkel (α2) mit einer senkrechten Ebene (P2) einnimmt, die durch das zweite Element (12) und den zweiten Teil (22) verläuft.

6. Luftfahrzeug (1), welches sich in Längsrichtung entlang einer Längsachse (X) und quer entlang einer Querachse (Y) und in der Höhe entlang einer Höhenachse (Z) erstreckt, die ein orthonomiertes Bezugssystem (R) bildern, wobei das Luftfahrzeug (1) ein Landegerät (5) aufweist mit mindestens einem Fahrwerk (6) gemäß einem der Ansprüche 1 bis 5.

7. Luftfahrzeug nach Anspruch 6,
**dadurch gekennzeichnet, dass** das Schwenkmittel (40) mit einem ersten spitzen Winkel (β1) gegenüber einer anteroposterioren Ebene (P1) des Luftfahrzeugs (1) ausgerichtet ist, die definiert ist durch die Höhenachse (Z) und die Längsachse (X) dieses Luftfahrzeugs (1), und mit einem ersten spitzen Winkel (α1) gegenüber dem Dämpfer (20) ausgerichtet ist.

8. Luftfahrzeug nach einem der Ansprüche 6 bis 7,
**dadurch gekennzeichnet, dass** der Dämpfer (20) entlang einer entfalteten Achse (AX) ausgerichtet ist, wenn das Fahrwerk (6) ausgefahren ist, wobei diese ausgefahrene Achse parallel zu einer anteroposterioren Ebene (P1) des Luftfahrzeugs (1) ist, die definiert ist durch die Höhenachse (Z) und die Längsachse (X) des Luftfahrzeugs (1).

9. Luftfahrzeug nach einem der Ansprüche 6 bis 8,
**dadurch gekennzeichnet, dass** das Schwenkmittel (40) fest mit dem Dämpfer (20) verbunden ist, wobei der Dämpfer (20) an dem Zylinderdämpfer (30) und dem Fahrwerkbein (10) angelenkt ist.

10. Luftfahrzeug nach einem der Ansprüche 6 bis 9,
**dadurch gekennzeichnet, dass** der Dämpfer (20) einen ersten Teil (21) und einen zweiten Teil (22) aufweist, die beweglich zueinander sind, wobei der erste Teil (21) an dem ersten Element (11) des Fahrwerkbeins (10) angelenkt ist, und der zweite Teil (22) fest mit dem Schwenkmittel (40) verbunden ist und an dem zweiten Element (12) des Fahrwerkbeins (10) und dem Zylinderdämpfer (30) angelenkt ist.

11. Luftfahrzeug nach einem der Ansprüche 6 bis 10,
**dadurch gekennzeichnet, dass** das Luftfahrzeug (1) einen Rumpf (2) aufweist, der mit einem Bug (3) versehen ist, wobei das Gehäuse (4) mindestens teilweise in dem Bug (3) angeordnet ist.

12. Landeverfahren eines Luftfahrzeugs (1), welches sich längs entlang einer Längsachse (X), quer entlang einer Querachse (Y) und in der Höhe entlang einer Höhenachse (Z) erstreckt, die ein orthonormiertes Bezugssystem (R) bilden, wobei das Luftfahrzeug (1) ein Landegerät (5) aufweist mit mindestens einem Fahrwerk (6), welches mit einem Fahrwerkbein (10) sowie einem Dämpfer (20) und einem Zylinderdämpfer (30) versehen ist, wobei der Zylinderdämpfer (30) einerseits das Einfahren des Fahrwerkbeins (10) in ein Gehäuse (4) des Luftfahrzeugs (1) und das Ausfahren des Fahrwerkbeins (10) aus dem Gehäuse (4) heraus sicherstellt, und andererseits eine Funktion der Energieabsorption während einer Notladung, wobei das Fahrwerkbein (10) ein erstes Element (11) aufweist, das ein Kontaktmittel (13) trägt, und ein zweites Element (12), die aneinander angelenkt sind, wobei das Fahrwerk (6) ein Schwenkmittel (40), um welches herum das Fahrwerkbein (10) schwingt, aufweist, wobei das Verfahren darin besteht, dass
- vor dem Kontakt des Luftfahrzeugs (1) mit dem Boden (S) das Fahrwerk (6) aus dem Gehäuse (4) ausgefahren wird, indem der Zylinderdämpfer (30) in eine erste zurückgezogene Stellung zurückgezogen wird, wobei das Fahrwerkbein (10) eine Drehung um das Schwenkmittel (30) herum in einer ersten Richtung (S1) ausführen muss, um in das Gehäuse (4) zurückzukehren,
- nach dem Kontakt des Kontaktmittels (13) mit dem Boden (S) der Dämpfer (20) komprimiert wird,
- wenn der Dämpfer (20) eine maximale Kompression erreicht hat, das Fahrwerkbein (10) von dem Gehäuse (4) wegbewegt wird, indem eine Drehung des Fahrwerkbeins (10) um das Schwenkmittel (40) in einer zweiten Richtung (S2), die entgegengesetzt zur ersten Richtung (S1) ist, ausgeführt wird.

13. Verfahren nach Anspruch 12,
**dadurch gekennzeichnet, dass** um das Fahrwerkbein (10) wegzubewegten:
- die Reaktionskraft des Bodens (S), die auf das Kontaktmittel (13) ausgeübt wird, verwendet wird, um ein Moment zu erzeugen, das zu der Drehung des Fahrwerkbeins (10) um das Schwenkmittel (40) herum führt,
- das Fahrwerkbein (10) in der zweiten Richtung (S2) gedreht wird, indem der Zylinderdämpfer (30) beansprucht wird, indem dieser in eine zweite zurückgezogene Stellung zurückgezogen wird, wobei der Zylinderdämpfer (30) sich über eine zweite Länge (L2) in die zweite zurückgezogene Stellung erstreckt, die kleiner ist als eine erste Länge (L1), die in der ersten zurückgezogenen Stellung erreicht wird.

14. Verfahren nach Anspruch 13,
**dadurch gekennzeichnet, dass** der Zylinderdämpfer (30) gestreckt wird, wenn die zweite zurückgezogene Stellung erreicht ist.

## Claims

1. Undercarriage (6) provided with an undercarriage leg (10) as well as a shock absorber (20), said undercarriage (6) comprising an actuator-shock absorber (30) for ensuring the retraction of said undercarriage leg (10) into a housing (4) of an aircraft (1) and the deployment of said undercarriage leg (10) out from said housing (4) prior to a landing, and also for ensuring an energy-absorption function during an emergency landing, said undercarriage leg (10) comprising a first element (11) carrying a contact means (13) and a second element (12) which are articulated to each other,
**characterised in that** said undercarriage (6) comprises a pivot means (40) allowing said undercarriage leg (10) to pivot about a pivot direction (D1), on the one hand, in a first direction (S1) in order to retract said undercarriage leg (10) into said housing (4) under the impulsion of said actuator-shock absorber (30) and, on the other hand, in a second direction (S2) opposite to the first direction (S1) during an emergency landing, in order to move said undercarriage leg (10) away from said housing (4) by actuating said actuator-shock absorber (30).

2. Undercarriage according to Claim 1,
**characterised in that** said pivot means (40) is secured to the shock absorber (20), said shock absorber (20) being articulated to the actuator-shock absorber (30) and to the undercarriage leg (10).

3. Undercarriage according to any one of Claims 1 to 2,
**characterised in that** said shock absorber (20) comprises a first part (21) and a second part (22) which are movable relative to each other, the first part (21) being articulated to the first element (11) of the undercarriage leg (10), the second part (22) being secured to said pivot means (40) and being articulated to the second element (12) of the undercarriage leg (10) and to the actuator-shock absorber (30).

4. Undercarriage according to Claim 3,
**characterised in that** said pivot means (40) forms a first acute angle (α1) with said second part (22).

5. Undercarriage according to Claim 3,
**characterised in that** said actuator-shock absorber (30) forms a second acute angle (α2) with an elevation plane (P2) passing through said second element (12) and said second part (22).

6. Aircraft (1) extending longitudinally along a longitudinal axis (X), transversely along a transverse axis (Y) and in elevation along an elevation axis (Z) defining an orthonormal frame of reference (R), said aircraft (1) comprising a landing gear (5) comprising at least one undercarriage (6) according to any one of Claims 1 to 5.

7. Aircraft according to Claim 6,
**characterised in that** said pivot means (40) forms a first acute angulation (β1) with an anteroposterior plane (P1) of the aircraft (1) defined by the elevation axis (Z) and the longitudinal axis (X) of said aircraft (1), and a first acute angle (α1) with said shock absorber (20).

8. Aircraft according to any one of Claims 6 to 7,
**characterised in that** said shock absorber (20) is directed along a deployed axis (AX) when the undercarriage (6) is deployed, said deployed axis being parallel to an anteroposterior plane (P1) of the aircraft (1) defined by the elevation axis (Z) and the longitudinal axis (X) of said aircraft (1).

9. Aircraft according to any one of Claims 6 to 8,
**characterised in that** said pivot means (40) is secured to the shock absorber (20), said shock absorber (20) being articulated to the actuator-shock absorber (30) and to the undercarriage leg (10).

10. Aircraft according to any one of Claims 6 to 9,
**characterised in that** said shock absorber (20) comprises a first part (21) and a second part (22) which are movable relative to each other, the first part (21) being articulated to the first element (11) of the undercarriage leg (10), the second part (22) being secured to said pivot means (40) and being articulated to the second element (12) of the undercarriage leg (10) and to the actuator-shock absorber (30).

11. Aircraft according to any ane of Claims 6 to 10,
**characterised in that**, said aircraft (1) comprising a fuselage (2) provided with a bottom structure (3), said housing (4) is at least partially arranged in said bottom structure (3).

12. Method for landing an aircraft (1) extending longitudinally along a longitudinal axis (X), transversely along a transverse axis (Y) and in elevation along an elevation axis (Z) defining an orthonormal frame of reference (R), said aircraft (1) comprising a landing gear (5) comprising at least one undercarriage (6) provided with an undercarriage leg (10) as well as a shock absorber (20) and an actuator-shock absorber (30), said actuator-shock absorber (30) ensuring, on the one hand, the retraction of said undercarriage leg (10) into a housing (4) of said aircraft (1) and the deployment of said undercarriage leg (10) out from said housing (4) and, on the other hand, an energy-absorption function during an emergency landing, said undercarriage leg (10) comprising a first element (11) carrying a contact means (13) and a second element (12) which are articulated to each other, said undercarriage (6) comprising a pivot means (40) about which said undercarriage leg (10) pivots, during which:
- prior to the contact of the aircraft (1) with the ground (S), the undercarriage (6) is deployed out from said housing (4) by retracting said actuator-shock absorber (30) into a first retracted position, the undercarriage leg (10) having to effect a rotation about the pivot means (30) in a first direction (S1) in order to return into the housing (4),
- following contact of the contact means (13) on the ground (S), the shock absorber (20) is compressed,
- when said shock absorber (20) reaches a maximum compression, said undercarriage leg (10) is moved away from said housing (4) by effecting a rotation of said undercarriage leg (10) about said pivot means (40) in a second direction (S2) opposite to the first direction (S1).

13. Method according to Claim 12,
**characterised in that** in order to move said undercarriage leg (10) away:
- use is made of the reaction force of the ground (S) exerted on the contact means (13) to create a moment inducing the setting in rotation of said undercarriage leg (10) about said pivot means (40),
- said undercarriage leg (10) is set in rotation in said second direction (S2) by actuating the actuator-shock absorber (30) by retracting it into a second retracted position, said actuator-shock absorber (30) extending over a second length (L2) in the second retracted position less than a first length (L1) reached in the first retracted position.

14. Method according to Claim 13,
**characterised in that** said actuator-shock absorber (30) is extended when said second retracted position is reached.
